# EUROPEAN PATENT APPLICATION

(11) **EP 2 372 514 A1**
(43) Date of publication of application: **05.10.2011**
(21) Application number: 10170264.5
(22) Date of filing: 21.07.2010
(51) Int. Cl.: G06F 3/048, G06F 1/16

(54) **Device and method to operate a window displayed on a screen via a corresponding thumbnail displayed on a touch sensitive screen.**

(30) Priority: 24.03.2010 TW 99108810
(71) Applicant: Acer Incorporated, Taipei Hsien 221 (TW)
(72) Inventor: Lin, Chih-Hsiang, Taipei Hsien 221 (TW); Lin, Rung-Lung, Taipei Hsien 221 (TW)
(74) Representative: Becker Kurig Straus

(57) **Abstract**

Multi-display electric devices and operation methods thereof are provided. The operation method is applicable to a multi-display electronic device including a screen, a touch-sensitive screen, and a processing module. A window is displayed in the screen, and a thumbnail corresponding to the window is displayed in the touch-sensitive screen by the processing module. The window is operated according to a touch-control operation command received on a display area of the thumbnail by the processing module. Therefore, the window on the screen may be operated via the touch-sensitive screen, to increase user convenience.

## Description

### CROSS REFERENCE TO RELATED APPLICATIONS

This Application claims priority of Taiwan Patent Application No. 099108810, filed on March 24, 2010, the entirety of which is incorporated by reference herein.

### BACKGROUND OF THE INVENTION

### Field of the Invention

The disclosure relates generally to a multi-display electric device comprising a screen and a touch-sensitive screen and an operation method thereof, and, more particularly to a multi-display electric device and an operation method thereof that operates a window displayed in the screen via the touch-sensitive screen.

### Description of the Related Art

With the maturity of touch panel technologies, and the function of multi-point touch supported by Windows 7 of Microsoft, software for touch-sensitive interfaces have been developed and announced by various companies, in which the input manner of traditional keyboard and mouse has been replaced by a touch-control manner; thus allowing the operational interface of computers to become more friendly and appropriate when considering human behavior.

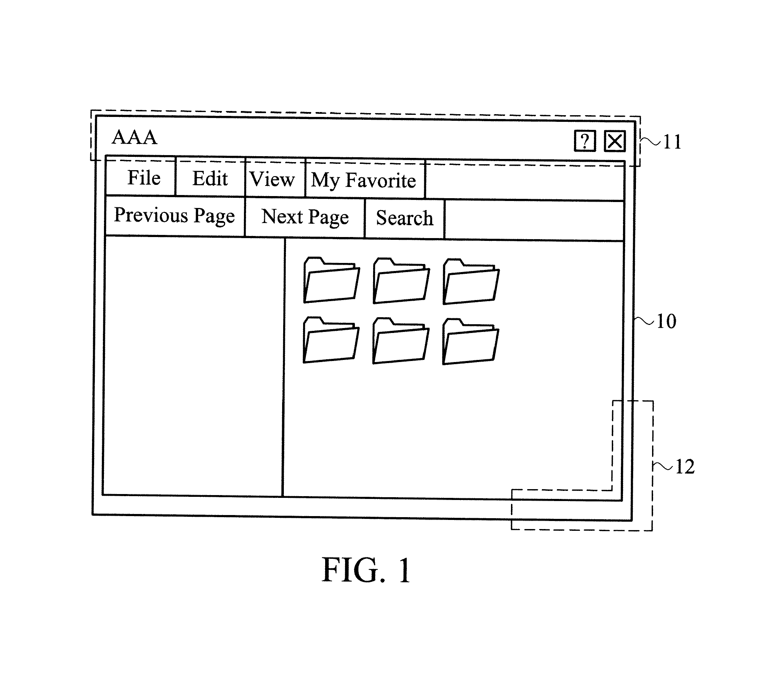

Although the software for touch-sensitive interfaces may provide convenient operations for windows, however, functions such as adjusting the size of windows or moving the position of windows are inconvenient for users. For example, in the Windows 7 operating system, the size of a general window 10 can be adjusted via an adjustment window area 11, and the position of the window 10 can be moved via a movement window area 12, as shown in Fig. 1. Since the adjustment window area 11 and the movement window area 12 are small, it is inconvenient to operate the areas using a touch-control manner. Therefore, due to the inconvenience for operating the window 10 via the touch panel, users always select the traditional keyboard and mouse for input operations, negating the benefits of using the a touch-control manner for friendlier and more appropriate interface when considering human behavior.

### BRIEF SUMMARY OF THE INVENTION

Multi-display electric devices and operation methods thereof are provided to overcome the mentioned problems.

In an embodiment of a multi-display operation method for use in a multi-display electronic device comprising a screen, a touch-sensitive screen, and a processing module, a window is displayed in the screen, and a thumbnail corresponding to the window is displayed in the touch-sensitive screen by the processing module. The window is operated according to a touch-control operation command received on a display area of the thumbnail by the processing module.

In some embodiments, when several windows are provided, the touch-sensitive screen further displays thumbnails corresponding to the respective windows.

In some embodiments, one of the thumbnails is selected according to a touch-control selection command received via the touch-sensitive screen, and the window corresponding to the selected thumbnail is operated according to the touch-control operation command.

An embodiment of a multi-display electronic device comprises a screen, a touch-sensitive screen, and a processing module. The screen displays a window. The processing module electrically couples to the screen and the touch-sensitive screen, and displays a thumbnail corresponding to the window via the touch-sensitive screen. The processing module operates the window according to a touch-control operation command received on a display area of the thumbnail.

In some embodiments, when several windows are provided, the processing module displays thumbnails corresponding to the respective windows via the touch-sensitive screen.

In some embodiments, the processing module selects one of the thumbnails according to a touch-control selection command received via the touch-sensitive screen, and operates the window corresponding to the selected thumbnail according to the touch-control operation command.

Therefore, the multi-display electric devices and operation methods thereof of the present disclosure can operate a window displayed in a screen by operating a thumbnail, corresponding to the window, displayed in a touch-sensitive screen; thereby enhancing the convenience for users during touch-control operations of the window.

Operation methods of a multi-display electric device may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating a window provided by a conventional operating system;

Fig. 2A is a schematic diagram illustrating a first embodiment of a multi-display electronic device of the invention;

Fig. 2B is a schematic diagram illustrating a front view of the multi-display electronic device in the first embodiment of the invention;

Fig. 3A is a schematic diagram illustrating a gesture of a window being maximized for the multi-display electronic device in the first embodiment of the invention;

Fig. 3B is a schematic diagram illustrating a gesture of a window being minimized for the multi-display electronic device in the first embodiment of the invention;

Fig. 3C is a schematic diagram illustrating a gesture of a window being closed for the multi-display electronic device in the first embodiment of the invention;

Fig. 4A is a schematic diagram illustrating a gesture of a window being enlarged for the multi-display electronic device in the first embodiment of the invention;

Fig. 4B is a schematic diagram illustrating a gesture of a window being minified for the multi-display electronic device in the first embodiment of the invention;

Fig. 4C is a schematic diagram illustrating a gesture of a window being range adjusted for the multi-display electronic device in the first embodiment of the invention;

Fig. 5 is a schematic diagram illustrating a front view of a multi-display electronic device in a second embodiment of the invention;

Fig. 6A is a schematic diagram illustrating an advanced mode for the multi-display electronic device in the second embodiment of the invention;

Fig. 6B is a schematic diagram illustrating the tracking of a thumbnail by a corresponding window for the multi-display electronic device in the first embodiment of the invention; and

Fig. 7 is a flowchart of an embodiment of a multi-display operation method of the invention.

### DETAILED DESCRIPTION OF THE INVENTION

Multi-display electric devices and operation methods thereof are provided.

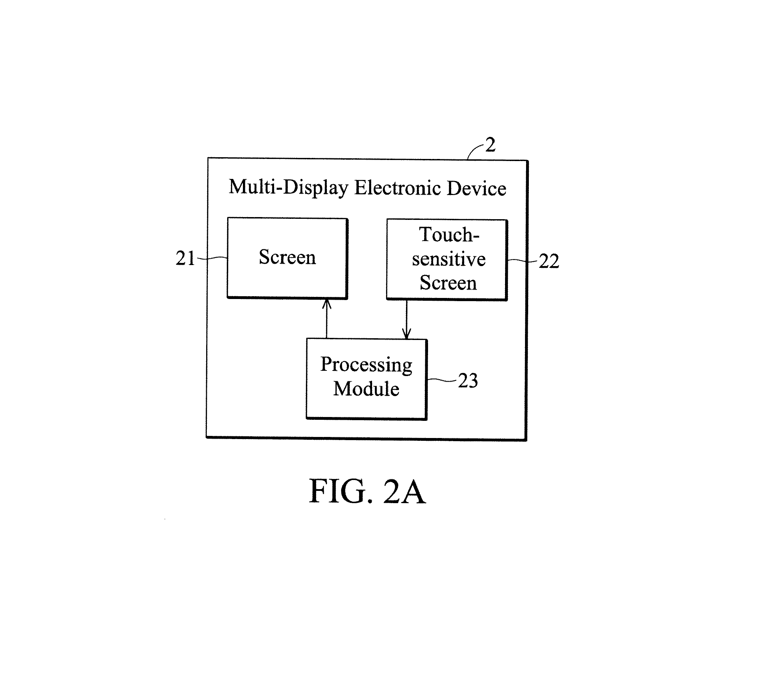

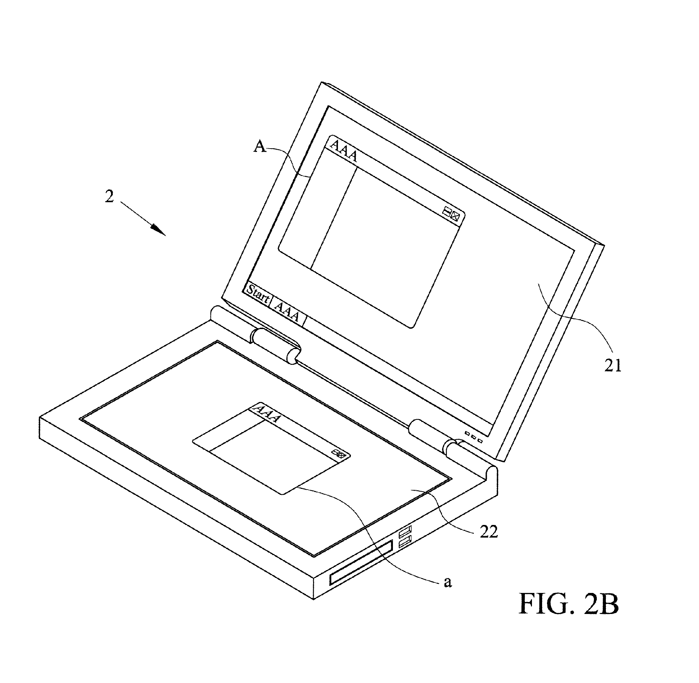

Please refer to Figs. 2A and 2B, wherein Fig. 2A is a schematic diagram illustrating a first embodiment of a multi-display electronic device of the invention, and Fig. 2B is a schematic diagram illustrating a front view of the multi-display electronic device in the first embodiment of the invention. In Fig. 2A, the multi-display electronic device 2 comprises a screen 21, a touch-sensitive screen 22, and a processing module 23. The processing module 23 is electrically coupled to the screen 21 and the touch-sensitive screen 22. When a user performs a touch-control gesture on the touch-sensitive screen 22, the processing module 23 will obtain the raw data generated according to the touch-control gesture, and accordingly calculate a touch-control event or coordinates of contact points corresponding to the touch-control gesture.

When the user selects a window 'A' in the screen 21, the processing module 23 will locate the selected window 'A', and obtain a window handle of the window 'A' via a Findwindow application in the window API (Application Interface). The processing module 23 can enable the touch-sensitive screen 22 to display a thumbnail 'a' corresponding to the window `A'. When the user inputs a touch-control operation command via the touch-sensitive screen 22 to adjust or control the thumbnail 'a', the processing module 23 will operate the window 'A' according to the touch-control operation command.

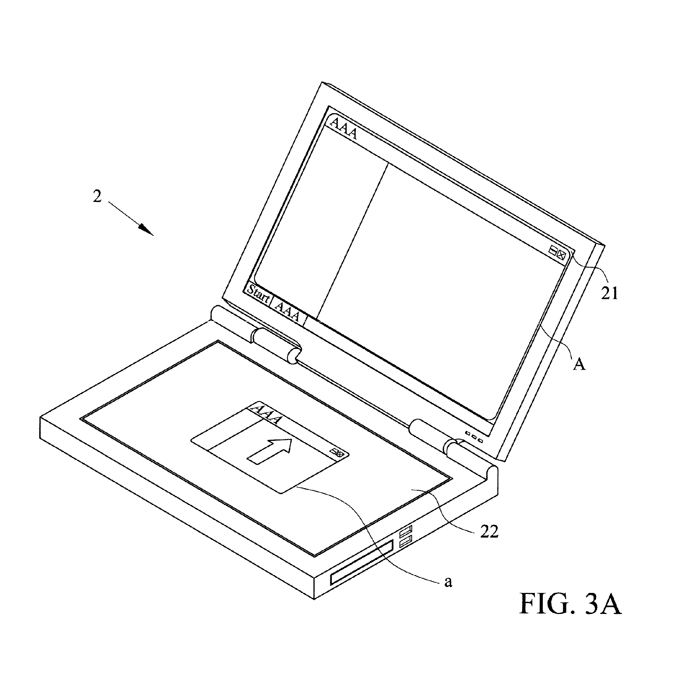

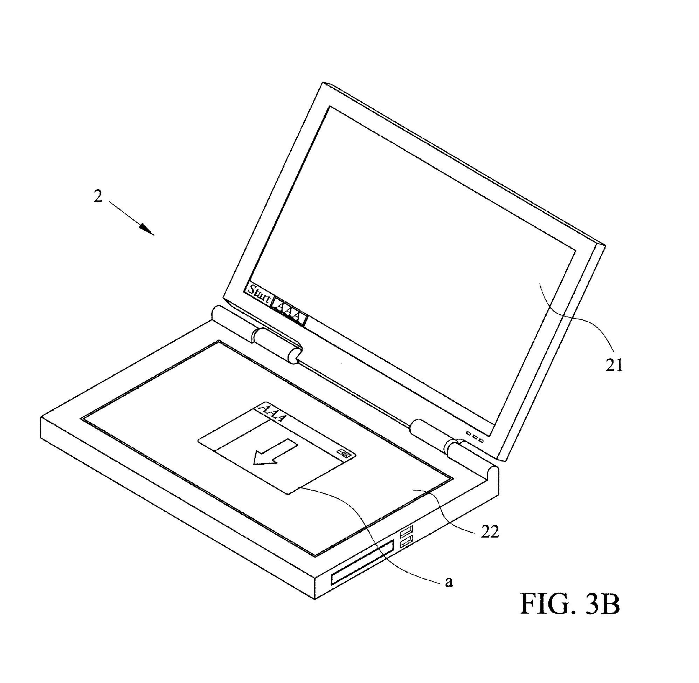

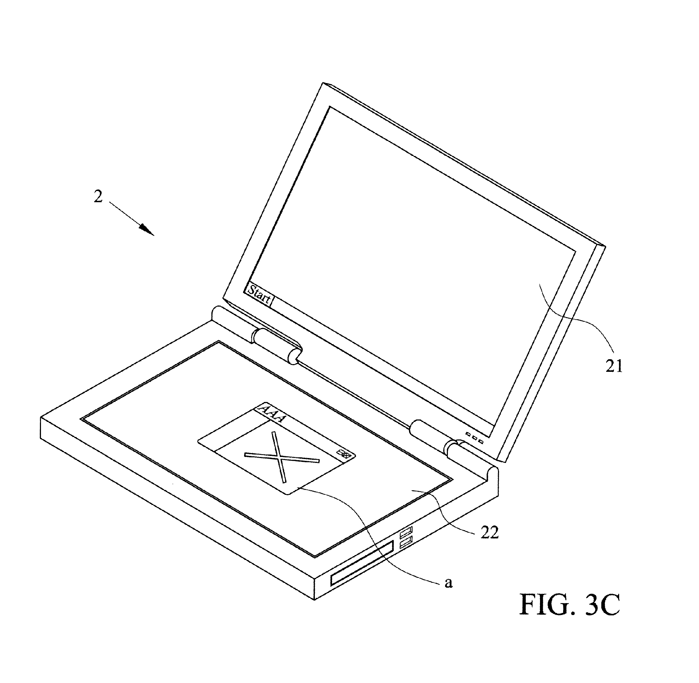

For example, a user can input a touch-control operation command via the touch-sensitive screen 22 using a gesture. In some embodiments, the gesture may be a flick along a specific direction, or a specific geometric figure. When the user uses a finger to flick upward at the position of the thumbnail 'a', the processing module 23 will maximize the size of the window 'A' in the screen 21, as shown in Fig. 3A. When the user uses a finger to flick downward at the position of the thumbnail 'a', the processing module 23 will minimize the size of the window 'A' in the screen 21, as shown in Fig. 3B. When the user inputs a cross gesture at the position of the thumbnail 'a', the processing module 23 will close the window 'A' in the screen 21, as shown in Fig. 3C.

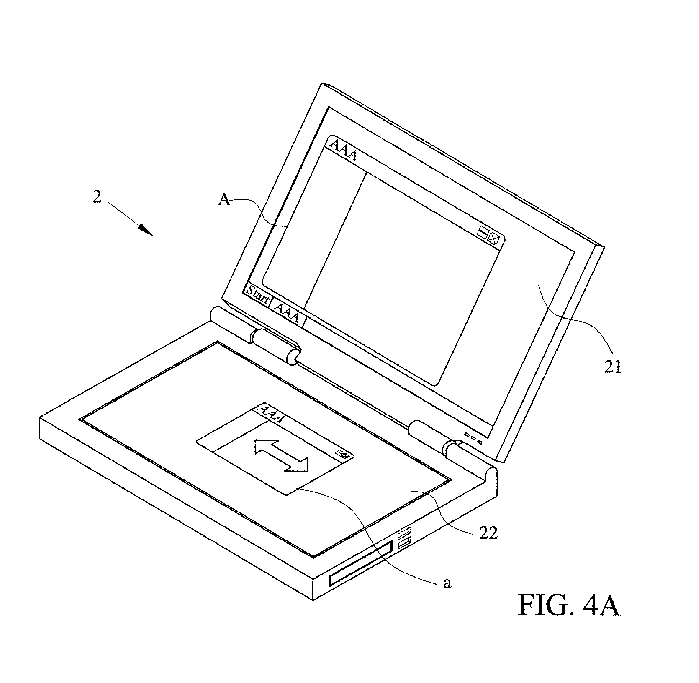

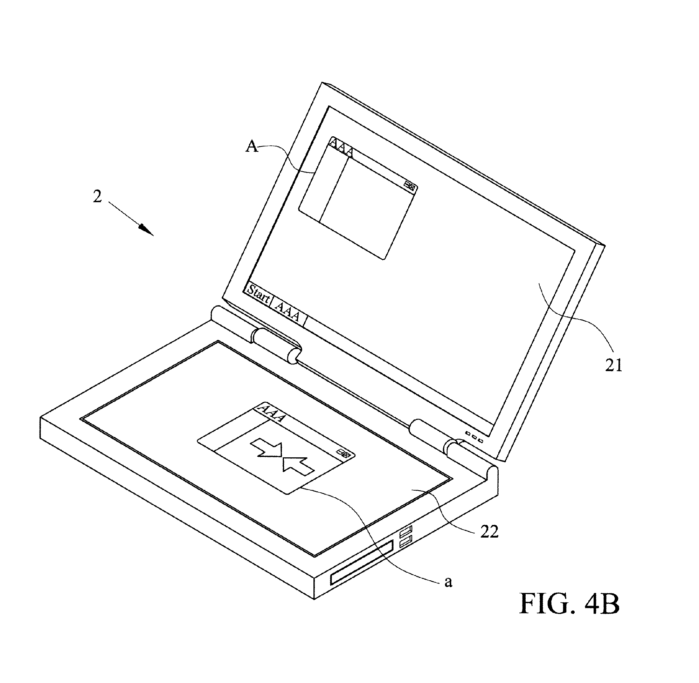

Further, the processing module 23 can also adjust the display area of the window 'A' according to other gestures input by the user via the touch-sensitive screen 22. For example, the user can use two fingers to point on the thumbnail 'a', and separate the fingers from each other, as shown in Fig. 4A. The processing module 23 can enlarge the display area of the window 'A' according to the departed distance of the two fingers. The user can also use two fingers to point to the thumbnail 'a', and make the fingers close relative to each other, as shown in Fig. 4B. The processing module 23 can minify the display area of the window 'A' according to the closed distance of the two fingers.

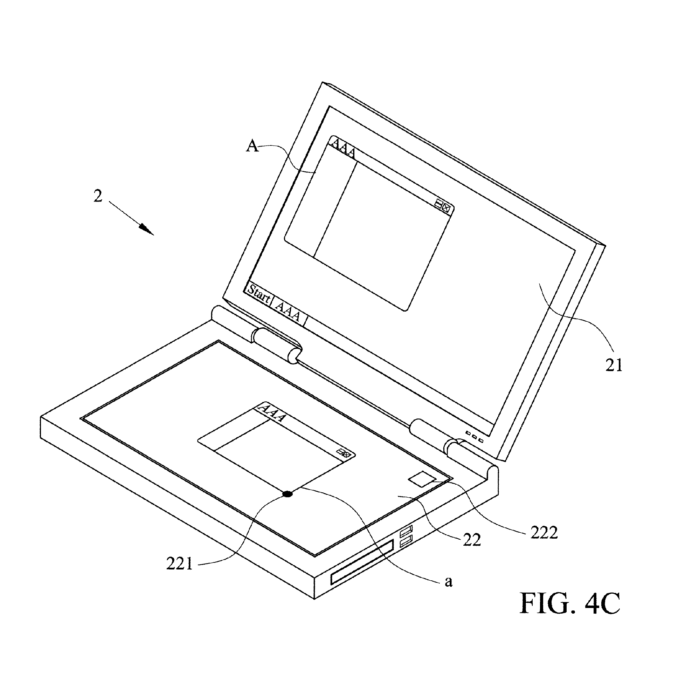

When the user clicks the thumbnail 'a' by using a single-touch manner, the processing module 23 can enable the multi-display electronic device 2 to enter an advanced mode, obtain the original size of the window 'A' by using a GetWindowRect application in the windows management application, and map the size to the thumbnail 'a'. Therefore, the user can move the thumbnail 'a' by using a touch-control manner, and the processing module 23 can move the window `A' according to an offset corresponding to the movement of the thumbnail 'a'. In the advanced mode, the processing module 23 can display a window adjustment point 221 at the edge of the thumbnail 'a' in the touch-sensitive screen 22, as shown in Fig. 4C. When the user moves the window adjustment point 221, the processing module 23 will obtain the offset of the window adjustment point 221 by using a ShowWindow or SetWindowPos application in the windows management application, and accordingly adjust the size of the window `A'.

Further, the processing module 23 will display a selection of operation forbiddance 222 in the touch-sensitive screen 22. When the selection of operation forbiddance 222 is clicked, the processing module 23 will ignore the touch-control operation command input by the user; thereby preventing sensing of unintentional contact on the touch-sensitive screen 22.

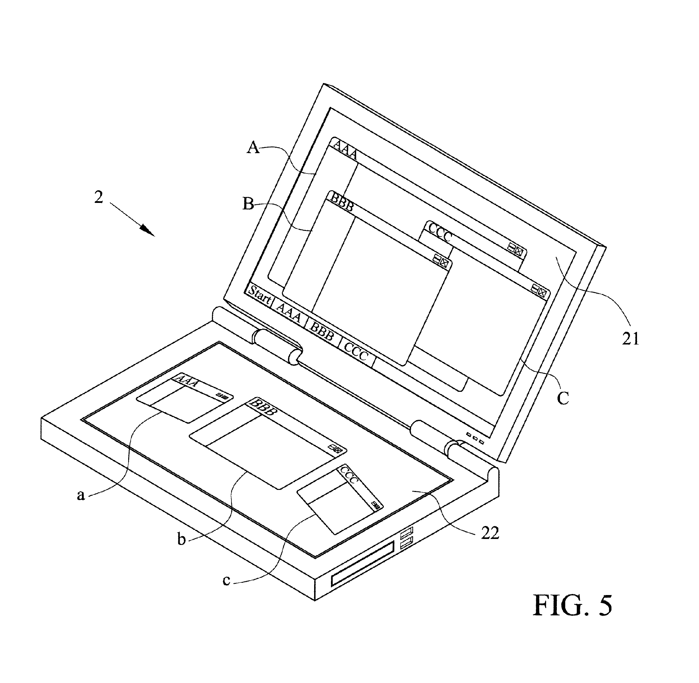

Please refer to Fig. 5, Fig. 5 is a schematic diagram illustrating a front view of a multi-display electronic device in a second embodiment of the invention. In the second embodiment, the screen 21 is also a touch-sensitive screen, and several windows (A, B and C) are displayed in the screen 21. When the user inputs a touch-control selection window command via the screen 21 or selects one of the windows to be operated via the mouse, the processing module 23 will obtain the selected window by using a Lowlevel Mouse Hook application in the windows management application, and obtain the window handles of the respective windows via the Findwindow application. The processing module 23 can display thumbnails 'a', 'b' and 'c' respectively corresponding to the windows 'A', 'B' and 'C' in the touch-sensitive screen 22 by using a Windows DWM application, and cause the selected window and the corresponding thumbnail to obtain a focus. The user can perform related touch-control operations for the thumbnail to obtain focus, so that the selected window is accordingly operated.

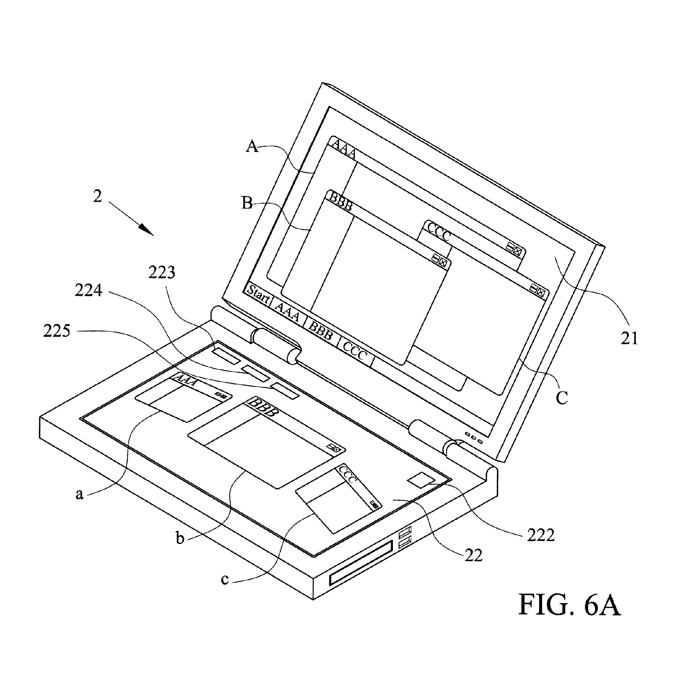

Additionally, in the advanced mode, the processing module 23 can further display a left-half enlargement selection 223, a right-half enlargement selection 224, and a maximization selection 225 in the touch-sensitive screen 22, as shown in Fig. 6A. When the left-half enlargement selection 223 is clicked, the left part of the window is enlarged. When the right-half enlargement selection 223 is clicked, the right part of the window is enlarged. When the maximization selection 225 is clicked, the window is displayed in a full-screen mode, wherein the size of the window is enlarged to the size of the touch-sensitive screen 22.

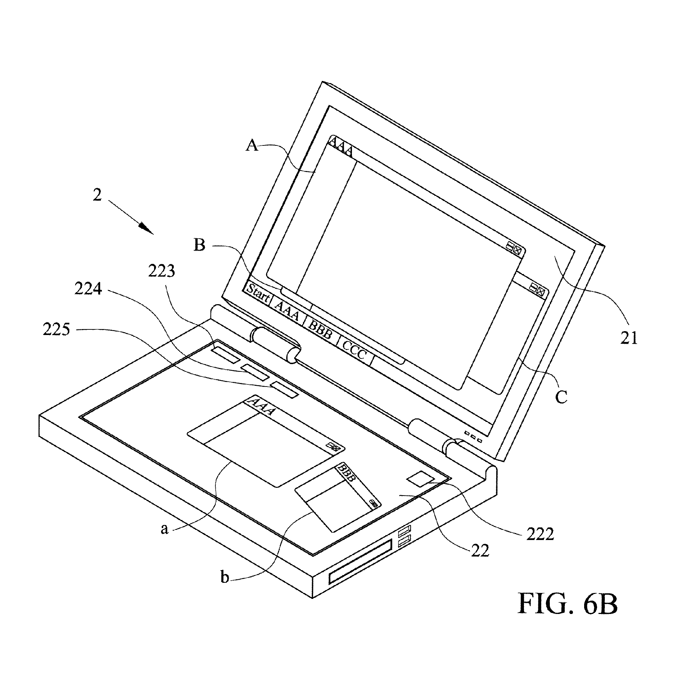

It is noted that, the processing module 23 can track the thumbnail corresponding to the window selected by the user, as shown in Fig. 6B. When the window 'B' obtains focus, the thumbnail 'b' obtains focus in the touch-sensitive screen 22, and a contact point input by the user falls within the range of the window `A', the processing module 23 will cause the thumbnail 'a' corresponding to the window 'A' to obtain focus, replace the thumbnail 'b' by the thumbnail 'a', and move the thumbnail 'a' to the center of the touch-sensitive screen 22; thus accomplishing the function of tracking, and allowing the user to efficiently select a window to be operated.

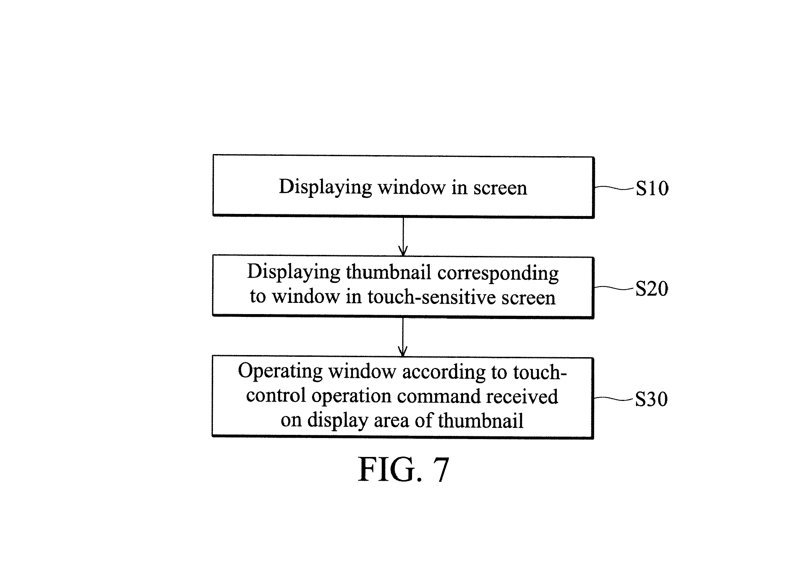

Please refer to Fig. 7, Fig. 7 is a flowchart of an embodiment of a multi-display operation method of the invention. The multi-display operation method can be used in a multi-display electronic device having a screen, a touch-sensitive screen, and a processing module.

In step S 10, a window is displayed in the screen.

In step S20, a thumbnail corresponding to the window is displayed in the touch-sensitive screen by the processing module.

In step S30, the window is operated according to a touch-control operation command received on a display area of the thumbnail by the processing module

Therefore, the processing module can operate the window in the screen according to the touch-control operation command input by the user via the touch-sensitive screen. The operation of the window may be an adjustment of the display area of the window in the screen, an adjustment of the position of the window in the screen, or closing of the window.

When several windows are displayed in the screen, the processing module can display thumbnails corresponding to the respective windows via the touch-sensitive screen. The processing module can cause a corresponding thumbnail to obtain the focus according to the window selected by the user, such that a user can input a touch-control operation command to operate the selected window. It is understood that, in some embodiments, the screen may be also a touch-sensitive screen, for receiving the touch-control selection command input by the user, and causing the selected window to obtain focus.

Multi-display operation methods for a multi-display electronic device, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A multi-display operation method, for use in a multi-display electronic device comprising a screen, a touch-sensitive screen, and a processing module, comprising:
displaying a window in the screen;
displaying a thumbnail corresponding to the window in the touch-sensitive screen by the processing module; and
operating the window according to a touch-control operation command received on a display area of the thumbnail by the processing module.

2. The method of claim 1, wherein the touch-control operation command is used to adjust the display area of the window, adjust the position of the window in the screen, or close the window.

3. The method of claim 1, further comprising when several windows are provided, displaying several thumbnails corresponding to the respective windows in the touch-sensitive screen.

4. The method of claim 3, further comprising:
selecting one of the thumbnails according to a touch-control selection command received via the touch-sensitive screen; and
operating the window corresponding to the selected thumbnail according to the touch-control operation command.

5. The method of claim 3, wherein when the screen is touch-sensitive, the method further comprises:
selecting one of the windows according to a touch-control selection window command received via the screen, and causing the selected window to obtain a focus; and
causing the thumbnail corresponding to the selected window to obtain the focus.

6. A multi-display electronic device, comprising:
a screen adapted for displaying a window;
a touch-sensitive screen; and
a processing module electrically coupled to the screen and the touch-sensitive screen, adapted for displaying a thumbnail corresponding to the window via the touch-sensitive screen, and for operating the window according to a touch-control operation command received on a display area of the thumbnail.

7. The multi-display electronic device of claim 6, wherein the touch-control operation command is used to adjust the display area of the window, adjust the position of the window in the screen, or close the window.

8. The multi-display electronic device of claim 6, wherein when several windows are provided, the processing module is further adapted to display several thumbnails corresponding to the respective windows via the touch-sensitive screen.

9. The multi-display electronic device of claim 8, wherein the processing module is further adapted to select one of the thumbnails according to a touch-control selection command received via the touch-sensitive screen, and to operate the window corresponding to the selected thumbnail according to the touch-control operation command.

10. The multi-display electronic device of claim 8, wherein when the screen is touch-sensitive, the processing module is further adapted to select one of the windows according to a touch-control selection window command received via the screen, and to cause the selected window to obtain a focus, and to cause the thumbnail corresponding to the selected window to obtain the focus.

11. Computer program product, comprising program code which, when loaded into and executed by a machine, causes the method of anyone of claims 1 to 5 to be performed.

12. Computer program according to claim 11, stored on a machine-readably medium.
